# EUROPÄISCHE PATENTSCHRIFT

(11) **EP 3 533 533 B1**
(45) Veröffentlichungstag und Bekanntmachung des Hinweises auf die Patenterteilung: **01.09.2021**
(21) Anmeldenummer: 19150631.0
(22) Anmeldetag: 08.01.2019
(51) Int. Cl.: B22D 2/00, B22D 46/00, G01K 7/02, G01K 15/00

(54) **VORRICHTUNG UND EIN VERFAHREN ZUM PRÜFEN EINER FUNKTIONSFÄHIGKEIT VON AN EINER GIESSFORM VERTEILT ANGEORDNETEN TEMPERATURSENSOREN**
DEVICE AND METHOD FOR TESTING A FUNCTIONALITY OF TEMPERATURE SENSORS DISTRIBUTED ON A CAST MOULD
DISPOSITIF ET PROCÉDÉ DE VÉRIFICATION D'UNE FONCTIONNALITÉ DES DÉTECTEURS DE TEMPÉRATURE RÉPARTIS SUR UNE LINGOTIÈRE

(30) Priorität: 28.02.2018 DE 102018203020
(43) Veröffentlichungstag der Anmeldung: 04.09.2019
(73) Patentinhaber: SMS Group GmbH, 40237 Düsseldorf (DE)
(72) Erfinder: Arzberger, Matthias, 45470 Mülheim a. d. Ruhr (DE); Vetter, Mike, 46519 Alpen (DE); Sifi, Nabil, 40225 Düsseldorf (DE); Thomas Marx, Thomas, 47877 Willich (DE)
(74) Vertreter: Klüppel, Walter

(56) Entgegenhaltungen:
- WO-A1-2004/082869
- CN-A- 101 905 300
- CN-A- 102 252 783
- CN-Y- 201 184 829
- JP-A- H05 220 552
- JP-A- H08 159 883
- JP-A- 2008 254 017
- KR-A- 20050 001 481

## Beschreibung

Die Erfindung betrifft eine Vorrichtung und ein Verfahren zum Prüfen einer Funktionsfähigkeit von an einer Gießform verteilt angeordneten Temperatursensoren.

Eine metallurgische Gießform wird mit Temperatursensoren ausgestattet, um Verfahrensparameter in Form von Temperatursignalen zu erhalten, die einen Rückschluss auf Eigenschaften eines momentanen Herstellungsverfahrens und einer in der Gießform enthaltenen Schmelze und eine Vorhersage von Eigenschaften von Verfahrenserzeugnissen ermöglichen. Um eine konstante Rückschluss- bzw. Vorhersagequalität zu gewährleisten, muss sichergestellt werden, dass die Messeigenschaften der Temperatursensoren in einem gewünschten Bereich liegen.

Hierzu ist es bekannt, die Temperatursensoren in regelmäßigen Zeitabständen auf ihre Funktionsfähigkeit zu prüfen, so dass Temperatursensoren, deren Messeigenschaften eine vorgegebene Mindestqualität unterschreiten gegen funktionsfähigere Temperatursensoren ausgetauscht werden können. Herkömmlich werden hierzu die Temperatursensoren manuell einzeln oder sequentiell getestet, um deren Messeigenschaften feststellen zu können. Während eines solchen Tests kann die Gießform nicht zur Herstellung einer Schmelze eingesetzt werden, was insbesondere bei einer Gießform in Form einer Stranggießkokille zu einem zeitweiligen Anlagenstillstand führt, was wiederum die Wartungskosten von mit einer solchen Stranggießanlage hergestellten metallischen Produkten erhöht.

CN 102 252 783 A offenbart ein Verfahren zum Testen von Thermoelementen einer metallurgischen Stranggießmaschine. Hierzu werden die Thermoelemente mit Heißdampfs beaufschlagt und erwärmt, während Temperatursignale der Thermoelemente erfasst und analysiert werden, um auf die Funktionsfähigkeit des jeweiligen Thermoelements zu schließen.

CN 101 905 300 A offenbart eine Schnelltestvorrichtung zum Testen der Funktionsfähigkeit von Thermoelementen eines Kristallisators einer Stranggießmaschine. Die Thermoelementsignale aller Thermoelemente werden an eine Datenverarbeitungseinheit gesendet, die die Thermoelementsignale analysiert.

JP H08 159 883 A offenbart ein Testverfahren zum Prüfen der Funktionsfähigkeit von Thermoelementen an einer Gießform einer Stranggießanlage. Eine Vielzahl von Thermoelementen wird in Gruppen entsprechend den Abschnitten der jeweiligen Gießform aufgeteilt. Dann wird die jeweilige Thermoelementgruppe mit einer Datenverarbeitungseinheit verbunden. Anschließend werden die Thermoelemente erwärmt. Auf Basis von Signalen der Thermoelemente wird dann die Funktionsfähigkeit der einzelnen Thermoelemente beurteilt.

JP H05 220 552 A offenbart ein Testverfahren zum Testen von Thermoelementen an einer Gießform einer Stranggießanlage. Hierzu werden die Thermoelemente mit einem heißen Gas beaufschlagt und erwärmt, während Temperatursignale der Thermoelemente erfasst und analysiert werden, um auf die Funktionsfähigkeit des jeweiligen Thermoelements zu schließen.

JP 05 061 691 B2, JP 04 214 818 B2, JP 2008 254 017 A und KR 10 2005 001 481 A offenbaren jeweils ein Testverfahren zum Testen von Thermoelementen an einer Gießform einer Stranggießanlage.

Eine Aufgabe der Erfindung ist es, ein schnelles Prüfen einer Funktionsfähigkeit von an einer Gießform verteilt angeordneten Temperatursensoren zu ermöglichen.

Diese Aufgabe wird durch die unabhängigen Patentansprüche gelöst. Vorteilhafte Ausgestaltungen sind in der nachfolgenden Beschreibung, den abhängigen Patentansprüchen und der Figur wiedergegeben, wobei diese Ausgestaltungen jeweils für sich genommen oder in verschiedener technisch sinnvoller Kombination von wenigstens zwei dieser Ausgestaltungen miteinander einen weiterbildenden, insbesondere auch bevorzugten oder vorteilhaften, Aspekt der Erfindung darstellen können. Ausgestaltungen der Vorrichtung können dabei Ausgestaltungen des Verfahrens entsprechen, und umgekehrt, selbst wenn im Folgenden hierauf im Einzelfall nicht explizit hingewiesen wird.

Eine erfindungsgemäße Vorrichtung zum Prüfen einer Funktionsfähigkeit von an einer Gießform verteilt angeordneten Temperatursensoren weist wenigstens eine mit wenigstens zwei Temperatursensoren verbindbare Auswertungselektronik zum gleichzeitigen Erfassen und Auswerten von Temperatursignalen der Temperatursensoren und wenigstens eine in der Nähe der Temperatursensoren anordbare Heizplatte oder Heizmatte zum gleichzeitigen Erwärmen der Temperatursensoren auf.

Erfindungsgemäß werden die zu testenden Temperatursensoren nicht manuell einzeln und nacheinander bzw. sequentiell getestet, sondern gleichzeitig. Hierzu werden die Temperatursensoren gemeinsam und zeitgleich mittels der Heizplatte oder Heizmatte erwärmt, die vorab manuell oder mittels eines technischen Hilfsmittels in die Nähe der Temperatursensoren gebracht worden ist. Während dieser Erwärmung der Temperatursensoren werden die dabei von den Temperatursensoren erzeugten Temperatursignale von der Auswertungselektronik erfasst und ausgewertet. Der Erwärmungsvorgang kann dabei zonenweise elektrisch moduliert werden. Durch diese Auswertung kann die Funktionsfähigkeit jedes einzelnen Temperatursensors ermittelt werden.

Da die Temperatursensoren gleichzeitig getestet werden, können die Funktionsfähigkeiten der einzelnen Temperatursensoren im Vergleich zu einem Fall, bei dem die Temperatursensoren manuell einzeln und nacheinander bzw. sequentiell getestet werden, deutlich schneller ermittelt werden. Hierdurch kann die Gießform schneller wieder eingesetzt werden, wodurch eine Anlagenstillstandzeit deutlich verkürzt werden kann. Dadurch können die Wartungskosten von mit einer entsprechenden metallurgischen Anlage erzeugten metallischen Produkten merklich gesenkt werden.

Durch die Verwendung einer Heizplatte oder Heizmatte zum Erwärmen der Temperatursensoren können diese sehr gleichmäßig erwärmt werden im Vergleich zu einem Fall, bei dem die Temperatursensoren mit einem heißen Gas erwärmt werden, da das strömende Gas stetig an Wärme verliert und dadurch die einzelnen Temperatursensoren mit unterschiedlichen Temperaturen beaufschlagt. Die Heizplatte kann eben oder gekrümmt ausgebildet sein, um in einem einheitlichen Abstand zu den Temperatursensoren angeordnet werden zu können. Die Heizplatte oder Heizmatte enthält wenigstens eine Widerstandsheizeinheit oder eine Wärmestrahlung emittierende Laserdiodenplatte, vorzugsweise mehrere verteilt angeordnete Heizeinheiten, die durch eine Versorgung der Heizplatte oder Heizmatte mit elektrischer Energie aktiviert werden.

Die Auswertungselektronik kann die eingehenden Temperatursignale beispielsweise mit vorgegebenen Temperaturwerten oder Temperaturverläufen vergleichen, um die Funktionsfähigkeit des jeweiligen Temperatursensors zu ermitteln. Die Auswertungselektronik kann zudem eingerichtet sein, bei der Prüfung der Funktionsfähigkeit der Temperatursensoren Informationen zum Heizbetrieb der Heizplatte oder Heizplatte zu berücksichtigen. Diese Informationen können beispielsweise vorab in der Auswertungselektronik gespeichert oder während des Heizbetriebs erfasst werden. Denkbar ist hierbei auch, dass die Auswertungselektronik die Versorgung der Heizplatte oder Heizmatte mit elektrischer Energie steuert und/oder regelt.

Die Kokille kann eine Blockgießkokille oder eine Stranggießkokille sein. Die an der Kokille angeordneten Temperatursensoren können beispielsweise als Thermoelemente ausgebildet sein.

Gemäß einer vorteilhaften Ausgestaltung ist die Auswertungselektronik mit allen Temperatursensoren verbindbar, die an einem im Wesentlichen eben ausgebildeten Seitenwandabschnitt der Gießform angeordnet sind, wobei die Heizplatte oder Heizmatte derart ausgebildet ist, dass mit ihr diese Temperatursensoren gleichzeitig erwärmbar sind. Hierbei können die Temperatursensoren an dem Seitenwandabschnitt zu einer Messgruppe zusammengefasst werden. Entsprechend können Temperatursensoren an anderen Seitenwandabschnitten der Gießform zu jeweils einer Gruppe zusammengefasst werden, um die Funktionsfähigkeiten aller an dem jeweiligen Seitenwandabschnitt angeordneten Temperatursensoren zu prüfen. Je mehr Temperatursensoren gleichzeitig getestet werden, desto schneller können die Funktionsfähigkeiten der Temperatursensoren geprüft und die Gießform wieder eingesetzt werden.

Nach einem erfindungsgemäßen Verfahren zum Prüfen einer Funktionsfähigkeit von an einer Gießform verteilt angeordneten Temperatursensoren werden wenigstens zwei Temperatursensoren gleichzeitig mittels einer Heizplatte oder Heizmatte erwärmt und Temperatursignale der Temperatursensoren während der Erwärmung gleichzeitig erfasst und ausgewertet.

Mit dem Verfahren sind die oben mit Bezug auf die Vorrichtung genannten Vorteile entsprechend verbunden. Insbesondere kann die Vorrichtung gemäß einer der oben genannten Ausgestaltungen oder einer beliebigen Kombination von wenigstens zwei dieser Ausgestaltungen miteinander zur Durchführung des Verfahrens verwendet werden.

Nach einer vorteilhaften Ausgestaltung werden alle an einem im Wesentlichen eben ausgebildeten Seitenwandabschnitt der Gießform angeordneten Temperatursensoren gleichzeitig mittels der Heizplatte oder Heizmatte erwärmt und die Temperatursignale von diesen Temperatursensoren während der Erwärmung gleichzeitig erfasst und ausgewertet. Mit dieser Ausgestaltung sind die oben mit Bezug auf die entsprechende Ausgestaltung der Vorrichtung genannten Vorteile entsprechend verbunden.

Im Folgenden wird die Erfindung unter Bezugnahme auf die anliegende Figur anhand einer bevorzugten Ausführungsform beispielhaft erläutert, wobei die nachfolgend erläuterten Merkmale sowohl jeweils für sich genommen als auch in unterschiedlicher technisch sinnvoller Kombination von wenigstens zwei dieser Merkmale miteinander einen vorteilhaften oder weiterbildenden Aspekt der Erfindung darstellen können. Es zeigt:

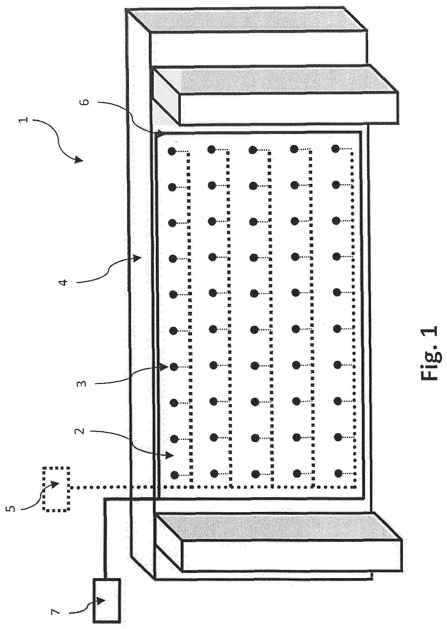

- Figur 1:: eine schematische Darstellung eines Ausführungsbeispiels für eine erfin-dungsgemäße Vorrichtung.

Figur 1 zeigt eine schematische Darstellung eines Ausführungsbeispiels für eine erfindungsgemäße Vorrichtung 1 zum Prüfen einer Funktionsfähigkeit von an einer Gießform 2 verteilt angeordneten Temperatursensoren 3. Von der Gießform 2 ist eine im Wesentlichen eben ausgebildeter Seitenwandabschnitt 4 gezeigt, an dem die Temperatursensoren 3 angeordnet sind.

Die Vorrichtung 1 weist eine mit den Temperatursensoren 3 verbundene Auswertungselektronik 5 zum gleichzeitigen Erfassen und Auswerten von Temperatursignalen der Temperatursensoren 3 auf. Insbesondere ist die Auswertungselektronik 5 mit allen Temperatursensoren 3 verbunden, die an dem im Wesentlichen eben ausgebildeten Seitenwandabschnitt 4 der Gießform 2 angeordnet sind.

Des Weiteren weist die Vorrichtung 1 wenigstens eine in der Nähe der Temperatursensoren 3 angeordnete Heizplatte oder Heizmatte 6 zum gleichzeitigen Erwärmen der Temperatursensoren 3 auf, die in Figur 1 auf der dem Betrachter zugewandten Seite des Seitenwandabschnitts 4 angeordnet ist, so dass die Temperatursensoren 3 verdeckt hinter der Heizplatte oder Heizmatte 6 angeordnet sind. Insbesondere ist die Heizplatte oder Heizmatte 6 derart ausgebildet, dass mit ihr die Temperatursensoren 3 gleichzeitig erwärmbar sind. Die Heizplatte oder Heizmatte 6 ist mit einer elektrischen Energieversorgung 7 verbunden, über die die Heizplatte oder Heizmatte 6 mit elektrischer Energie versorgt werden kann.

### Bezugszeichenliste

- 1: Vorrichtung
- 2: Gießform
- 3: Temperatursensor
- 4: Seitenwandabschnitt von 2
- 5: Auswertungselektronik
- 6: Heizplatte oder Heizmatte
- 7: Energieversorgung

## Patentansprüche

1. Vorrichtung (1) zum Prüfen einer Funktionsfähigkeit von an einer Gießform (2) verteilt angeordneten Temperatursensoren (3), **gekennzeichnet durch** wenigstens eine mit wenigstens zwei Temperatursensoren (3) verbindbare Auswertungselektronik (5) zum gleichzeitigen Erfassen und Auswerten von Temperatursignalen der Temperatursensoren (3) und wenigstens eine in der Nähe der Temperatursensoren (3) anordbare Heizplatte oder Heizmatte (6) zum gleichzeitigen Erwärmen der Temperatursensoren (3).

2. Vorrichtung (1) nach Anspruch 1, **dadurch gekennzeichnet, dass** die Auswertungselektronik (5) mit allen Temperatursensoren (3) verbindbar ist, die an einem im Wesentlichen eben ausgebildeten Seitenwandabschnitt (4) der Gießform (2) angeordnet sind, und die Heizplatte oder Heizmatte (6) derart ausgebildet ist, dass mit ihr diese Temperatursensoren (3) gleichzeitig erwärmbar sind.

3. Verfahren zum Prüfen einer Funktionsfähigkeit von an einer Gießform (2) verteilt angeordneten Temperatursensoren (3), **dadurch gekennzeichnet, dass** wenigstens zwei Temperatursensoren (3) gleichzeitig mittels einer Heizplatte oder Heizmatte (6) erwärmt werden und dass Temperatursignale der Temperatursensoren (3) während der Erwärmung gleichzeitig erfasst und ausgewertet werden.

4. Verfahren nach Anspruch 3, **dadurch gekennzeichnet, dass** alle an einem im Wesentlichen eben ausgebildeten Seitenwandabschnitt (4) der Gießform (2) angeordneten Temperatursensoren (3) gleichzeitig mittels der Heizplatte oder Heizmatte (6) erwärmt werden und dass die Temperatursignale von diesen Temperatursensoren (3) während der Erwärmung gleichzeitig erfasst und ausgewertet werden.

## Claims

1. Device (1) for checking a functional capability of temperature sensors (3) arranged in distribution at a casting mould (2), **characterised by** at least one electronic evaluating system (5), which is connectible with at least two temperature sensors (3), for simultaneous detection and evaluation of temperature signals of the temperature sensors (3) and at least one heating plate or heating mat (6), which can be arranged in the vicinity of the temperature sensors (3), for simultaneous heating of the temperature sensors (3).

2. Device (1) according to claim 1, **characterised in that** the electronic evaluating system (5) is connectible with all temperature sensors (3), which are arranged at a side wall section (4) of substantially planar construction of the casting mould (2), and the heating plate or heating mat (6) is constructed in such a way that these temperature sensors (3) are simultaneously heatable by the heating plate or mat.

3. Method for checking a functional capability of temperature sensors (3) arranged in distribution at a casting mould (2), **characterised in that** at least two temperature sensors (3) are simultaneously heated by means of a heating plate or heating mat (6) and that temperature signals of the temperature sensors (3) are simultaneously detected and evaluated during the heating.

4. Method according to claim 3, **characterised in that** all temperature sensors (3) arranged at a side wall section (4) of substantially planar construction of the casting mould (2) are simultaneously heated by means of the heating plate or heating mat (6) and that the temperature signals of these temperature sensors (3) are simultaneously detected and evaluated during the heating.

## Revendications

1. Dispositif (1) destiné à la vérification d'un bon fonctionnement de capteurs de la température (3) qui sont disposés en étant répartis contre un moule de coulée (2), **caractérisé par** au moins un composant électronique d'évaluation (5) qui peut être raccordé à au moins deux capteurs de la température (3), destiné à l'enregistrement et à l'évaluation simultanés de signaux de température des capteurs de la température (3) et au moins une plaque chauffante ou une enveloppe chauffante (6) qui peut venir se disposer à proximité des capteurs de la température (3), destinée au réchauffement simultané des capteurs de la température (3).

2. Dispositif (1) selon la revendication 1, **caractérisé en ce que** le composant électronique d'évaluation (5) peut être raccordé à tous les capteurs de la température (3) qui sont disposés contre un tronçon de paroi latérale (4) du moule de coulée (2), réalisé pour être essentiellement de forme plane, et la plaque chauffante ou l'enveloppe chauffante (6) est réalisée d'une manière telle, qu'avec elle, ces capteurs de la température (3) peuvent être réchauffés de manière simultanée.

3. Procédé destiné à la vérification d'un bon fonctionnement de capteurs de la température (3) qui sont disposés en étant répartis contre un moule de coulée (2), **caractérisé en ce que** l'on réchauffe au moins deux capteurs de la température (3) d'une manière simultanée au moyen d'une plaque chauffante ou d'un d'une enveloppe chauffante (6) et **en ce que** l'on procède de manière simultanée à un enregistrement et à une évaluation de signaux de température des capteurs de la température (3) au cours du réchauffement.

4. Procédé selon la revendication 3, **caractérisé en ce que** l'on réchauffe tous les capteurs de la température (3) qui sont disposés contre un tronçon de paroi latérale (4) du moule de coulée (2), réalisé pour être essentiellement de forme plane, d'une manière simultanée au moyen de la plaque chauffante ou de l'enveloppe chauffante (6) et **en ce que** les signaux de température de ces capteurs de la température (3) sont enregistrés et sont évalués de manière simultanée au cours du réchauffement.
